(19) Europäisches Patentamt / European Patent Office / Office européen des brevets

(11) **EP 3 764 530 A1**

(12) **EUROPEAN PATENT APPLICATION**
published in accordance with Art. 153(4) EPC

(43) Date of publication:
**13.01.2021 Bulletin 2021/02**

(51) Int Cl.:
**H02M 3/156** (2006.01)     **H02M 1/08** (2006.01)
**H05B 33/08** (2020.01)

(21) Application number: **19763724.2**

(22) Date of filing: **06.03.2019**

(86) International application number:
**PCT/KR2019/002590**

(87) International publication number:
**WO 2019/172643 (12.09.2019 Gazette 2019/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.03.2018 KR 20180026461**

(71) Applicant: **LG Innotek Co., Ltd.**
**Seoul 07796 (KR)**

(72) Inventor: **YOON, Dong Keun**
**Seoul 07796 (KR)**

(74) Representative: **M. Zardi & Co S.A.**
**Via G. B. Pioda, 6**
**6900 Lugano (CH)**

(54) **POWER SUPPLY**

(57) A power supply according to the present invention comprises: a conversion unit for controlling a level of an input voltage according to a pulse control signal applied to a first switch element and then outputting an output voltage to a load; a detection unit for detecting an output current of the load; and a control unit for generating the pulse control signal according to the output current of the load and driving the first switch element according to the generated pulse control signal, wherein the control unit comprises: a first reference signal outputting unit for receiving a first power voltage and outputting a first reference signal corresponding to a reference voltage by using the first power voltage; a second reference signal outputting unit for receiving a second power voltage and the first reference signal and outputting a second reference signal corresponding to the first reference signal by using the second power voltage; a detection signal outputting unit for outputting a detection signal corresponding to the output current detected by the detection unit; and a current compensation unit for comparing the second reference signal and the detection signal and generating a pulse control signal to compensate the output current of the load according to a result of the comparison.

【FIG. 10】

**Description**

[Technical Field]

Embodiments relate to a power supply, and particularly, to a power supply for controlling a constant current of a light-emitting device.

[Background Art]

In order to supply energy to an electronic circuit that requires relatively a high voltage, the electronic circuit should be stepped up to a high voltage for use in an application in conjunction with a system. In addition, it is necessary to step down a high voltage to a low voltage depending on the electronic circuit. To this end, modeling and analysis of a DC-DC converter as one of various step-down and step-up converters has been studied.
The DC-DC converter may be largely classified into an insulation type and a non-insulation type.
The insulation type has an advantage that the input and output may be insulated, that is, it may be insulated with a transformer using a magnetic core to ensure stability, and a step-up/down ratio may be adjusted by adjusting a winding ratio.
As a type of DC-DC converter, a buck type includes a forward converter, a half-bridge converter, a full-bridge converter, etc., and a buck-boost type includes a flyback converter, etc.
In particular, since the flyback converter operates with only one high-voltage switch element, its structure is simple, thereby implementing the converter at low cost. In addition, the DC-DC converter may be referred to as a switch mode supply unit because it is formed of a single chip together with a negative feedback controller which senses an error of an output signal and controls the error.
Meanwhile, recently, a power supply for supplying power to a light-emitting diode (LED) has been required to be small in size and low in cost, and accordingly, a design for minimizing components has been required.
In this case, the components constituting the power supply may be classified by a control method of the LED. For example, when the LED is controlled by a constant current control method, the components are divided into a block outputting a sensed value of an output current, a block outputting a reference voltage, and a block compensating the output current by comparing the sensed value and the reference voltage.
In addition, when a potential difference between the ground of the block outputting the sensed value and the block compensating the output current is different, the components may further include an insulation type component such as a photo coupler for transmitting the sensed value to the compensation block.
However, in case of using the insulation type component such as the photo coupler as described above, there are problems that configuration of a feedback circuit is complicated and a signal transmitting step is complicated as a number of circuit components constituting the power supply is increased.

[Disclosure]

[Technical Problem]

An embodiment according to the present invention provides a power supply that may perform signal transmission between blocks having different potential differences using an error amplifier.
In addition, the embodiment according to the present invention provides a power supply capable of minimizing an error that occurs when transferring a sensing voltage of an output current by applying an error amplifier.
In addition, the embodiment according to the present invention provides a power supply capable of minimizing a deviation of a reference voltage signal generated according to a deviation of power supplied to a block for outputting a reference voltage.
Technical problems to be solved by the proposed embodiments are not limited to the above-mentioned technical problems, and other technical problems not mentioned may be clearly understood by those skilled in the art to which the embodiments proposed from the following descriptions belong.

[Technical Solution]

A power supply according to an embodiment includes: a conversion unit that adjusts a level of an input voltage according to a pulse control signal applied to a first switch element to output an output voltage to a load; a sensing resistor disposed at an output terminal of the load and sensing a voltage corresponding to a output current of the load; an error amplifier connected to the sensing resistor and amplifying the voltage sensed by the sensing resistor to output; a reference signal output part that receives a power voltage and outputs a reference signal based on the power voltage;

and a current compensation unit that compares an output signal of the error amplifier and an output signal of the reference signal output part, and outputs the pulse control signal of the first switch element for compensating the output current according to the comparison result, wherein the reference signal output part includes a first reference signal output part that receives a first power voltage and outputs a first reference signal having a duty corresponding to a target current according to the first power voltage, a second reference signal output part that receives a second power voltage having magnitude different from that of the first power voltage and outputs a second reference signal having the same duty as the first reference signal according to the second power voltage, and a second power voltage output part that outputs the second power voltage to the second reference signal output part.

In addition, the first power voltage is 3.3V, and the second power voltage is 2.5V.

In addition, the second power voltage output part includes a down resistor connected to an output terminal of the first power voltage and outputting the second power voltage downing magnitude of the first power voltage, and a power supply element that compares the second power voltage and a reference voltage downed via the down resistor, and is selectively switched according to the comparison result to output the second power voltage to the second reference signal output part.

In addition, the power supply element includes a first amplifier receiving the second power voltage output via the down resistor via a non-inverting terminal and receiving a reference voltage via an inverting terminal, and a second switch element connected to an output terminal of the first amplifier and selectively switched according to an output signal of the first amplifier.

In addition, a collector terminal of the second switch element constituting a cathode terminal of the power supply element is connected to the non-inverting terminal of the first amplifier together with an output terminal of the down resistor.

In addition, the error amplifier includes a plurality of first resistors connected to one end of the sensing resistor, a plurality of second resistors connected to the other end of the sensing resistor, a second amplifier including an inverting terminal connected to the plurality of first resistors and a non-inverting terminal connected to the plurality of second resistors, and a voltage distribution resistor for reducing an output value of the second amplifier to transmit it to the current compensation unit.

In addition, the second amplifier amplifies a voltage applied to ends of the sensing resistor by at least nine times to output.

In addition, the output value of the second amplifier when the output current is a target current is 70% to 80% of a third power voltage supplied to the second amplifier.

In addition, a source terminal of the first switch element is connected to a first ground, and the sensing resistor is connected to a second ground different from the first ground.

In addition, the error amplifier, the current compensation unit, and the reference signal output part are connected to the same first ground as the first switch element.

Meanwhile, a power supply according to an embodiment includes: a conversion unit that adjusts a level of an input voltage according to a pulse control signal applied to a first switch element to output an output voltage to a load; a sensing resistor disposed at an output terminal of the load and sensing a voltage corresponding to a output current of the load; an error amplifier connected to the sensing resistor and amplifying the voltage sensed by the sensing resistor to output; a reference signal output part that receives a power voltage and outputs a reference signal based on the power voltage; and a current compensation unit that compares an output signal of the error amplifier and an output signal of the reference signal output part, and outputs the pulse control signal of the first switch element for compensating the output current according to the comparison result, wherein the error amplifier includes a plurality of first resistors connected to one end of the sensing resistor, a plurality of second resistors connected to the other end of the sensing resistor, a first amplifier including an inverting terminal connected to the plurality of first resistors and a non-inverting terminal connected to the plurality of second resistors, and a voltage distribution resistor for reducing an output value of the first amplifier to transmit it to the current compensation unit, and the output value of the first amplifier when the output current is a target current is 70% to 80% of the power voltage supplied to the first amplifier.

In addition, the reference signal output part includes a first reference signal output part that receives a first power voltage and outputs a first reference signal having a duty corresponding to a target current according to the first power voltage, a second reference signal output part that receives a second power voltage having magnitude different from that of the first power voltage and outputs a second reference signal having the same duty as the first reference signal according to the second power voltage, and a second power voltage output part that outputs the second power voltage to the second reference signal output part, wherein the second power voltage output part includes a down resistor connected to an output terminal of the first power voltage and outputting the second power voltage downing magnitude of the first power voltage, a second amplifier receiving the second power voltage output via the down resistor via the non-inverting terminal and receiving a reference voltage via the inverting terminal, and a second switch element connected to an output terminal of the second amplifier and selectively switched according to an output signal of the second amplifier.

In addition, a collector terminal of the second switch element constituting a cathode terminal of the second power voltage output part is connected to the non-inverting terminal of the second amplifier together with an output terminal of the down resistor.

[Advantageous Effects]

In the present invention, an error amplifier is disposed at an output terminal of a sensing resistor, and a detection signal is transmitted via the error amplifier. Therefore, in the present invention, while separating a ground of a DC-DC converter and a ground of a light-emitting diode, a ground of a constant current controller is used as the same ground as the DC-DC converter. Accordingly, according to an embodiment of the present invention, the accuracy of the sensed current may be increased by solving occurrence of a current deviation caused by the ground separation, and a disposition space of a printed circuit board may be reduced by circuit minimization according to eliminating an insulating component that needs to be additionally disposed. In addition, according to the present invention, the degree of freedom in circuit design may be increased when sensing current in a state in which a ground potential difference exists.

In addition, in the present invention, a power supply circuit having a low tolerance is added to a reference signal output circuit. Accordingly, in the present invention, the final reference signal supplied to a current compensation unit is generated by a power having a tolerance lower than that of a VDD power. Therefore, according to the present invention, the tolerance of the VDD power supplied to a micro control unit may be ignored, and an error of the reference signal generated by a power tolerance of the VDD power may be minimized.

In addition, in the present invention, a current applied to the sensing resistor of an output terminal of a light-emitting diode is sensed by using an error amplifier. In this case, the present invention allows the error amplifier to have an amplification degree of at least 9 times or more. In other words, the present invention allows an output voltage of the error amplifier to have a level of 70% to 80% of a power voltage of the error amplifier in a state in which normal current flows to the light-emitting diode. In the present invention, while increasing an output voltage value of the error amplifier as compared with the conventional one, a voltage distribution part is additionally disposed between the error amplifier and the current compensation unit. Accordingly, in the present invention, it is possible to minimize an error of a sensing voltage value with respect to an output current of the light-emitting diode according to a tolerance of a plurality of resistors constituting the error amplifier. Therefore, according to the embodiment of the present invention, it is possible to increase the accuracy of a current sensing value by applying to current sensing of a device requiring precision control.

[Description of Drawings]

FIG. 1 is a view for showing a schematic configuration of a power supply according to an embodiment of the present invention.

FIG. 2 is a detailed circuit diagram of a rectifier and a power factor compensation unit illustrated in FIG. 1.

FIG. 3 is a detailed circuit diagram of the power supply shown in FIG. 1.

FIG. 4 is a circuit diagram showing an error amplifier 161 according to an embodiment of the present invention.

FIG. 5 is a circuit diagram of a current compensation unit according to an embodiment of the present invention.

FIG. 6 is a circuit diagram of a triangular wave generator of FIG. 5.

FIG. 7 is a view showing a driving waveform of a triangular wave generator according to an embodiment of the present invention.

FIG. 8 is a circuit diagram of a constant current source constituting a triangular wave generator according to an embodiment of the present invention.

FIG. 9 is a view showing a relationship between a power voltage and a reference signal according to an embodiment of the present invention.

FIG. 10 is a circuit diagram of a power supply according to a second embodiment of the present invention.

FIG. 11 is a detailed circuit diagram of a reference signal output part of FIG. 10.

FIG. 12 is a detailed circuit diagram of a second power voltage output part of FIG. 11.

FIG. 13 is a view showing waveforms of a reference signal according to the second embodiment of the present invention.

FIG. 14 is a detailed circuit diagram of an error amplifier of FIG. 10.

[Modes of the Invention]

Hereinafter, the embodiment disclosed in the present specification will be described in detail with reference to the accompanying drawings, but the same or similar components are designated by the same reference numerals regardless of drawing numbers, and repeated description thereof will be omitted. The component suffixes "module" and "part" used in the following description are given or mixed together only considering the ease of creating the specification, and have no meanings or roles that are distinguished from each other by themselves. In addition, in describing the embodiments disclosed in the present specification, when it is determined that detailed descriptions of a related well-known art unnecessarily obscure gist of the embodiments disclosed in the present specification, the detailed description thereof will be omitted. Further, the accompanying drawings are merely for facilitating understanding of the embodiments disclosed in the present specification, the technological scope disclosed in the present specification is not limited by the accompanying drawings, and it should be understood as including all modifications, equivalents and alternatives that fall within the spirit and scope of the present invention.

It will be understood that, although the terms "first," "second," etc. may be used herein to describe various elements, these elements should not be limited by these terms. These terms are only used to distinguish one element from another.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between," "adjacent" versus "directly adjacent," etc.).

As used herein, the singular forms "a," "an" and "the" are intended to include the plural forms as well, unless the context clearly indicates otherwise.

It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

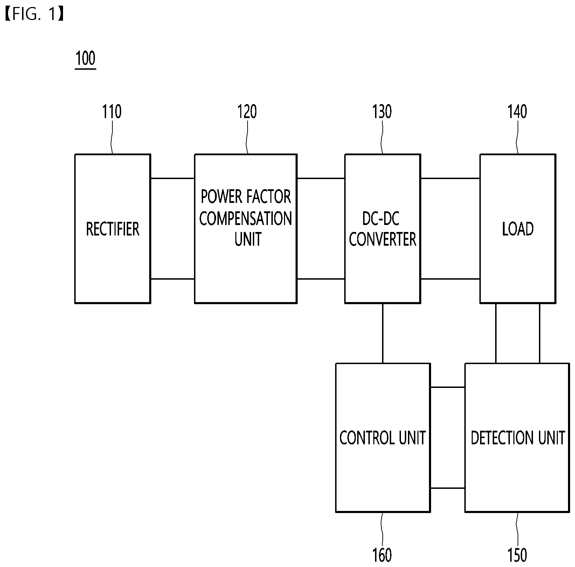

FIG. 1 is a block diagram showing a schematic configuration of a power supply according to an embodiment of the present invention.

Referring to FIG. 1, the power supply 100 supplies power to a load 140 (for example, a light-emitting diode), thereby converting input power into power required by the load 140.

To this terminal, the power supply includes a rectifier 110, a power factor compensation unit 120, a DC-DC converter 130, the load 140, a detection unit 150, and a control unit 160.

The rectifier 110 includes first to fourth diodes BD1, BD2, BD3, and BD4.

The rectifier 110 includes a bridge diode as described above, and converts commercial AC power (for example, 110V to 220V) supplied from the outside into DC power and outputs the DC power.

The power factor compensation unit 120 compensates and outputs a power factor with respect to the DC power converted by the rectifier 110.

The power factor compensation unit 120 may also be referred to as a step-up converter, and includes a boost function for boosting and outputting the DC power in addition to a function of compensating a power factor by making an input current having a phase equal to an input voltage.

The power factor compensation unit 120 receives the DC power rectified by the rectifier 110, and includes a switch element, a capacitor, and an inductor to step up a voltage from the input DC power. Here, the diode has a function of preventing reverse flow and a bypass function, and the capacitor is a smoothing capacitor that charges the DC power output via the rectifier 110 to output a smoothing voltage.

The DC-DC converter 130 may change a level of input power based on a control signal to provide an output voltage to an output terminal. The DC-DC converter 130 may be configured in plural to be driven in parallel with each other. In this case, one input power may be branched to input to the plurality of DC-DC converters, and a voltage output from each of the plurality of DC-DC converters may be output to one output terminal. That is, the plurality of DC-DC converters may process individually a change in the level of the input power to supply one output voltage. When using one DC-DC converter to design a DC-DC converter for high current, a size of elements in one DC-DC converter increases and complexity increases, but as described above, a current value of each DC-DC converter may be reduced by connecting the plurality of DC-DC converters in parallel with each other to configure one DC-DC converter 130, and thus there is an effect that a high output may be achieved while avoiding problems that the size of elements in the plurality of DC-DC converters excessively increases or the complexity of the circuit increases.

The DC-DC converter 130 may perform a specified process on an unprocessed input power to obtain an output power of a desired level, but at this time, control is required to obtain a desired output power. In particular, control is essential in order to obtain a well-regulated output voltage even in situations in which the input voltage and load current may change.

As a method for controlling the DC-DC converter 130, there are a voltage mode control method and a current mode control method. In the present invention, the DC-DC converter 130 may be controlled by constant current control among them. To this end, the power supply according to the present invention may sense an output current of the load 140, and may control a switching operation of the switch element constituting the DC-DC converter 130 based on a difference value between the output current and a reference current.

The load 140 is driven by power converted by the DC-DC converter 130. Preferably, the load 140 may be a light-emitting diode (LED).

The detection unit 150 is disposed at an output terminal of the load 140. The detection unit 150 may output a voltage value corresponding to a current applied to the output terminal of the load 140. To this end, the detection unit 150 may include a sensing resistor $R_{SEN}$.

The control unit 160 may sense an actual voltage of an output current transmitted via the detection unit 150, may sense a reference signal corresponding to a reference voltage, and may control the DC-DC converter 130 according to a difference value between the actual voltage and the reference voltage.

Hereinafter, a detailed circuit structure of each of the configurations will be described with reference to the accompanying drawings.

**<Circuit diagram of Rectifier and Power factor compensation unit>**

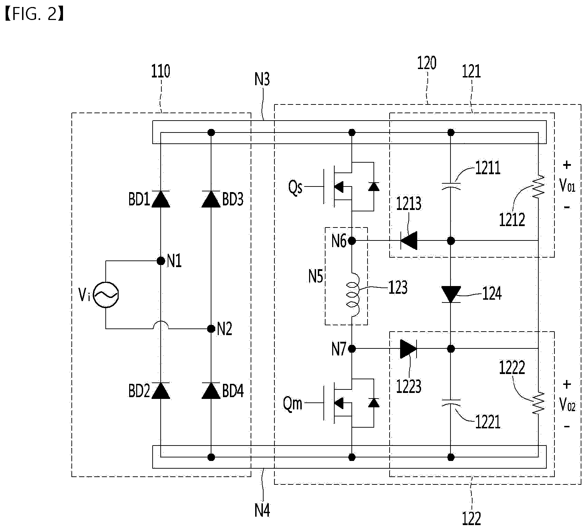

FIG. 2 is a detailed circuit diagram of a rectifier and a power factor compensation unit illustrated in FIG. 1.

Referring to FIG. 2, a rectifier 110 receives an input AC power to rectify and output. The rectifier 110 may be a bridge rectifier, and may include first to fourth diodes BD1 to BD4.

The rectifier 110 may receive the input AC power to first and second nodes to rectify, and may output the rectified power to third and fourth nodes.

A connection relationship between the first to fourth diodes BD1 to BD4 of the rectifier 110 will be described.

The rectifier 110 includes an anode which is an electrode connected to a P region and a cathode which is an electrode connected to an N region of the first to fourth diodes BD1 to BD4.

An anode terminal of the first diode BD1 is connected to a first node N1, and a cathode terminal thereof is connected to a third node N3.

An anode terminal of the second diode BD2 is connected to a fourth node N4, and a cathode terminal thereof is connected to a second node N2.

An anode terminal of the third diode BD3 is connected to the second node N2, and a cathode terminal thereof is connected to the third node N3.

An anode terminal of the fourth diode BD4 is connected to the fourth node N4, and the cathode terminal thereof is connected to the second node N2.

An inductor 123, which is an energy storage element synchronized with operations of first and second switch elements Qs and Qm, may accumulate energy and output the accumulated energy to the power factor compensation unit 120. In this case, the power factor compensation unit 120 may include a plurality of boosters (which may be referred to as an amplifier). That is, the inductor 123 may repeat an operation of supplying the accumulated energy to first and second amplifiers 121 and 122 constituting the power factor compensation unit 120.

The first and second amplifiers 121 and 122 constituting the power factor compensation unit 120 may be synchronized with the inductor 123 to amplify and output an input voltage.

The first amplifier 121, the second amplifier 122, and the inductor 123 may be connected in series with each other. The inductor 123 is disposed between the first amplifier 121 and the second amplifier 122 in the drawing, but the embodiment is not limited thereto.

The inductor 123, the first amplifier 121, and the second amplifier 122 may be disposed in series in order, or the first amplifier 121, the second amplifier 122, and the inductor 123 may be disposed in series in order.

An inrush current path part 124 provides a path through which an inrush current flows, which may be generated during initial driving of the power supply 100, and it is possible to solve a problem that a device having a high current rating should be applied as a semiconductor device existing on the path of the inrush current.

The inrush current path part 124 may be connected between the first amplifier 121 and the second amplifier 122.

The first and second amplifiers 121 and 122 may have a circuit configuration as shown in FIG. 2.

Hereinafter, a fifth node N5 is defined as a super node of a sixth node N6 and a seventh node N7. The first amplifier 121 may be connected between the third node N3 and the fifth node N5.

The second amplifier 122 may be connected between the fifth node N5 and the fourth node N4. Therefore, the first and second amplifiers 121 and 122 may be connected in series with each other.

The inductor 123 may be connected between the sixth node N6 and the seventh node N7.

The position of the inductor 123 is not limited to that described above.

The inductor 123 may be connected on the third node N3 between the rectifier 110 and the first amplifier 121, and may be connected on the fourth node N4 between the rectifier 110 and the second amplifier 122. Therefore, the rectifier 110, the first and second amplifiers 121 and 122, and the inductor 123 may be connected in series with each other.

The first amplifier 121 may include the first switch element Qs and a first output part connected in parallel thereto. The second amplifier 122 may include the second switch element Qm and a second output part connected in parallel thereto.

The first output part of the first amplifier 121 may include a first capacitor 1211, a first resistor 1212, and a first output part diode 1213.

The first capacitor 1211 and the first resistor 1212 may be connected in parallel with each other, and the first output part diode 1213 may be connected in series with them.

In the drawing, the first output part diode 1213 is connected between the fifth node N5 and an eighth node N8, but the embodiment is not limited thereto, and the first output part diode 1213 may be connected on the third node N3 in a forward direction between the first switch element Qs and the first capacitor 1211.

The second output part of the second amplifier 122 may include a second capacitor 1221, a second resistor 1222, and a second output part diode 1223.

The second capacitor 1221 and the second resistor 1222 may be connected in parallel with each other, and the second output part diode 1223 may be connected in series with them.

In the drawing, the second output part diode 1223 is connected between the fifth node N5 and a ninth node N9, but the embodiment is not limited thereto.

The second output part diode 1223 may be connected on the fourth node N4 in a forward direction between the second switch element Qm and the second capacitor 1221.

Referring to the drawings, the inrush current path part 123 may be connected between a tenth node N10 to which the first capacitor 1221 and the first output part diode 1213 are connected and an eleventh node N11 to which the second capacitor 1221 and the second output part diode 1223 are connected.

The inrush current path part 124 may be composed of a diode, and an anode terminal of the inrush current path part 124 may be connected to an anode terminal of the first output part diode 1213, and a cathode terminal of the inrush current path part 124 may be connected to a cathode terminal of the second output part diode 1223.

When the power supply 100 is initially driven, a voltage of ends of the first and second capacitors 1211 and 1221 becomes 0V. Therefore, the first and second capacitors 1211 and 1221 operate like a short circuit instantaneously.

When an initial input power is applied to the power supply 100, a high charging current may flow to the first capacitor 1211 and the second capacitor 1221 that operate like a short circuit. In particular, when a voltage of the input power Vi is maximum and a phase is 90 degrees, the inrush current may have a maximum value.

The inrush current during the initial drive of the power supply 100 may flow to the second capacitor 1221 via the first capacitor 1211 and the inrush current path part 124 having a relatively small impedance rather than the inductor 123. The first and second capacitors 1211 and 1221 are charged by the inrush current, a terminal voltage of the first and second capacitors 1211 and 1221 increases, and the inrush current, which is a charging current for the first and second capacitors 1211 and 1221, falls to a normal state.

For example, when the input power is an AC power having a peak value of 460V, an effective value of the AC power passing through the rectifier 110 may be about 650V, and when each of the first and second output parts outputs a voltage of 400V magnitude in the normal state, 250V is applied to the anode terminal of the inrush current path part 124 and 400V is applied to the cathode terminal thereof. That is, since a reverse voltage is applied to a diode of the inrush current path part 124, the diode of the inrush current path part 124 may operate in an open state.

**<Circuit diagram of DC-DC Converter>**

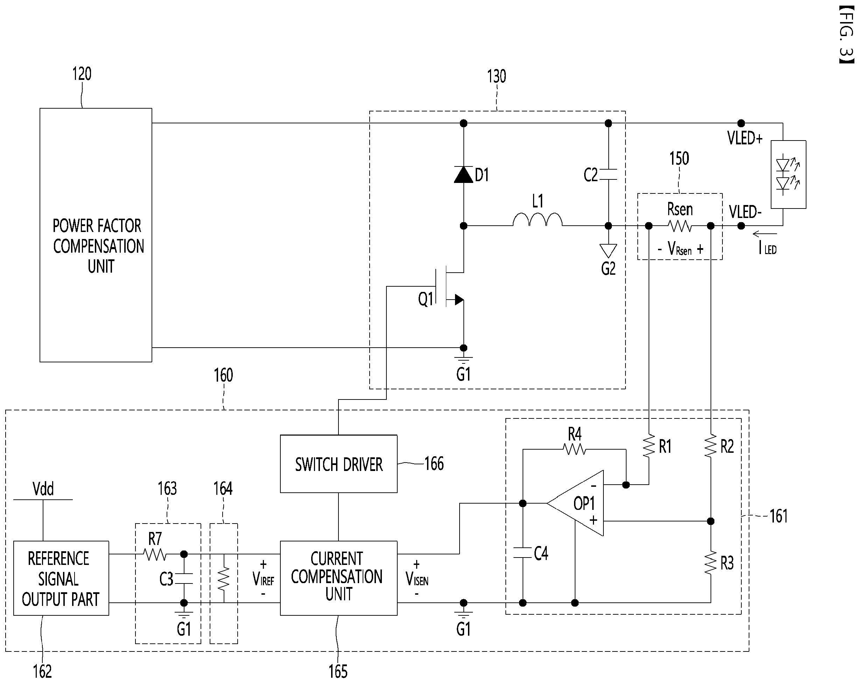

FIG. 3 is a detailed circuit diagram of the power supply shown in FIG. 1.

Referring to FIG. 3, a DC-DC converter 130 includes a switch element Q1, a first diode D1, a first inductor L1, and a second capacitor C2.

Such a DC-DC converter 130 may be largely classified into an insulation type and a non-insulation type. The insulation type has an advantage that the input and output may be insulated, that is, it may be insulated with a transformer using a magnetic core to ensure stability, and a step-up/down ratio may be adjusted by adjusting a winding ratio.

In addition, as a type of DC-DC converter, a buck type includes a forward converter, a half-bridge converter, a full-bridge converter, etc., and a buck-boost type includes a flyback converter, etc.

In particular, since the flyback converter operates with only one high-voltage switch element, its structure is simple, thereby implementing the converter at low cost. In addition, such a DC-DC converter may be referred to as a switch mode supply unit because it is formed of a single chip together with a negative feedback controller which senses an error of an output signal and controls the error.

Such a DC-DC converter 130 may be configured in various forms, and, a non-insulated buck type will be described in the present invention.

The DC-DC converter 130 may include the switch element Q1, the first diode D1, the first inductor L1, and the second capacitor C2.

An anode terminal of the first diode D1 may be connected to an input power (more specifically, an output terminal of a power factor compensation unit 120), and a cathode terminal thereof may be connected to one terminal of the switch element Q1. In addition, the other terminal of the switch element Q1 may be connected to a first ground G1.

In addition, the switch element Q1 may be connected to the control unit 160 to control a switching operation according to a control signal of the control unit 160. In addition, one terminal of the first inductor L1 may be connected to the cathode terminal of the first diode D1 and one terminal of the switch element Q1. Preferably, a drain terminal of the switch element Q1 may be connected to the cathode terminal of the first diode D1. Further, a source terminal of the switch element Q1 may be connected to the first ground G1. Furthermore, a gate terminal of the switch element Q1 may be connected to the control unit 160. Such a switch element Q1 may include an n-MOS transistor.

In addition, one terminal of the second capacitor C2 may be connected to the anode terminal of the first diode D1, and the other terminal thereof may be connected to the other terminal of the first inductor L1. That is, the first diode D1 and the switch element Q1 may be connected in series with each other, and the first diode D1 and the second capacitor C2 may be connected in parallel with each other. The first inductor L1 may be disposed between the first diode D1 and the second capacitor C2.

Meanwhile, the detection unit 150 is disposed at the output terminal of the load 140. In this case, the detection unit 150 includes a sensing resistor $R_{SEN}$. That is, one end of the sensing resistor $R_{SEN}$ may be connected to the output terminal of the load 140, and the other end thereof may be connected to the second ground G2.

As described above, the switch element Q1 and the sensing resistor $R_{SEN}$ are connected to different grounds, and thus they have a potential difference. Accordingly, a sensing voltage measured by the sensing resistor $R_{SEN}$ may be directly transmitted to the control unit 160 controlling the switch element Q1 in the circuit connection relationship as shown in the drawing. Therefore, such a structure requires a connection that may overcome the potential difference of the ground. Accordingly, in the related art, an insulation type photo coupler is disposed between the sensing resistor $R_{SEN}$ and the control unit 160. However, in the present invention, the sensing voltage of the sensing resistor $R_{SEN}$ may be directly transmitted to the control unit 160 while removing the photo coupler.

To this end, in the present invention, an error amplifier (to be described later) is configured to transmit the sensing voltage to the control unit 160. The error amplifier may operate as a differential amplifier. In addition, since a difference value between two terminal voltages is input as an input of the error amplifier, the error amplifier may receive an input from its own ground and another ground. Further, since an output voltage of the error amplifier is formed based on the ground to which the error amplifier is connected, such a potential difference of the ground may be overcome.

Meanwhile, in FIG. 3, the DC-DC converter 130 may be configured in a state in which the switch element Q1 is positioned in a region in which the first diode D1 is disposed. That is, the switch element Q1 may be a transistor, one terminal thereof may be connected to an output terminal of the power factor compensation unit 120, and the other terminal thereof may be connected to the cathode terminal of the first diode D1. One terminal of the first inductor L1 may be connected to the cathode terminal of the first diode D1, and the other terminal thereof may be connected to the one terminal of the second capacitor C2. The other terminal of the second capacitor C2 may be connected to the anode terminal of the first diode D1 and the other terminal of the input power.

In this case, grounds of the control unit 160 and the sensing resistor $R_{SEN}$ may be set to be the same. In other words, when the switch element Q1 is disposed at the position as shown above, the ground of the control unit 160 and the ground of the sensing resistor $R_{SEN}$ may be set to be the same, and thus, a component such as the photo coupler may be eliminated. However, when the DC-DC converter 130 is configured as described above, the source terminal of the switch element Q1 should be connected to a ground different from that of the control unit 160, and accordingly, there is a problem that the control unit 160 may not control directly the switch element Q1.

Accordingly, in case of the above circuit configuration, although a component such as the photo coupler may be eliminated, a separate circuit (for example, a pulse transformer) for controlling the switch element Q1 should be added. In addition, when the switch element Q1 is disposed at the position, the switch element Q1 should use a p-MOS type and not an n-MOS type. Accordingly, there is a problem that a unit cost increases due to formation of the switch element Q1 to the p-MOS type, and a gate circuit for controlling the same increases.

Therefore, in the present invention, the switch element Q1 is formed in the n-MOS type while the switch element Q1 is disposed at the above position. In addition, the ground of the control unit 160 is set to be the same as that of the switch element Q1. Accordingly, in the present invention, the control unit 160 may directly control the switch element Q1, and thus additional components may be eliminated. In addition, a signal transmission circuit such as a photo coupler required as the potential difference of the ground is different may be eliminated by using an error amplifier (to be described later) as a configuration for sensing a signal of the sensing resistor $R_{SEN}$.

The load 140 is disposed at an output terminal of the DC-DC converter 130. The load 140 is driven by power transmitted via the DC-DC converter 130. The load 140 may be a lighting load, and thus may include a plurality of light-emitting diodes connected in series or in parallel with each other.

### <Circuit diagram of Detection unit>

The detection unit 150 is connected to the output terminal of the load 140.

One end of the detection unit 150 may be connected to the output terminal of the load 140, and the other end thereof may be connected to the other end of the first inductor L1 and the other end of the second capacitor C2.

In addition, the detection unit 150 is connected to a second ground G2 different from the first ground G1 to which the switch element Q1 is connected. The detection unit 150 includes the sensing resistor $R_{SEN}$.

That is, when the load 140 is driven by the power output from the DC-DC converter 130, a voltage corresponding to an output current flowing through the output terminal of the load 140 is applied to the sensing resistor $R_{SEN}$. Accordingly, in the present invention, the constant current control may be performed by controlling the switching operation of the switch element Q1 included in the DC-DC converter 130 according to the voltage corresponding to the output current applied to the sensing resistor $R_{SEN}$.

## <Circuit diagram of Control unit of First embodiment

Hereinafter, a configuration of the control unit 160 of the present invention will be described in more detail.

The control unit 160 includes an error amplifier 161 connected to the sensing resistor $R_{SEN}$ and outputting a detection signal detecting a voltage applied to the sensing resistor $R_{SEN}$, a reference signal output part 162 for outputting a reference signal corresponding to a reference voltage according to a first power voltage Vdd, a smoothing part 163 for smoothing the reference signal output via the reference signal output part 162, a down resistor 164 for lowering a level of the smoothed reference signal, a current compensation unit 155 for comparing the reference signal with the detection signal and outputting a current compensation signal according thereto, and a switch driver 166 for controlling the switching operation of the switch element Q1 according to the current compensation signal output via the current compensation unit 155.

## <Circuit diagram of Error amplifier according to First embodiment>

An error amplifier 161 is connected to the detection unit 150, and amplifies a voltage applied to the detection unit 150 to output the amplified voltage to the current compensation unit 155.

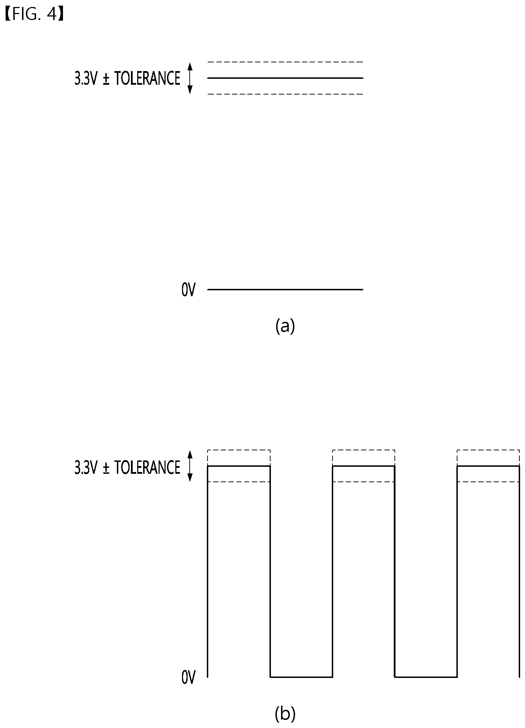

FIG. 4 is a circuit diagram showing an error amplifier 161 according to an embodiment of the present invention.

Referring to FIG. 4, the error amplifier 161 may include a first amplifier OP1, first to fourth resistors R1, R2, R3, and R4, and a fourth capacitor C4. Hereinafter, a connection relationship between the first amplifier OP1 constituting the error amplifier 161 and the resistors connected thereto will be described.

The first amplifier OP1 may operate as a differential amplifier. A non-inverting terminal (+) and an inverting terminal (-) of the first amplifier OP1 may be connected to a current sensing node in which the sensing resistor $R_{SEN}$ is disposed.

The first resistor R1 may be connected between one end of the sensing resistor $R_{SEN}$ and the inverting terminal (-) of the first amplifier OP1.

The second resistor R2 may be connected between the other end of the sensing resistor $R_{SEN}$ and the non-inverting terminal (+) of the first amplifier OP1.

The third resistor R3 may be connected between a node corresponding to a contact point between the non-inverting terminal (+) of the first amplifier OP1 and the second resistor R2 and the ground.

The fourth resistor R4 is a resistor constituting negative feedback, and may be connected between the inverting terminal (-) of the first amplifier OP1 and the output terminal of the first amplifier OP1.

The fourth capacitor C4 may be connected between the output terminal of the first amplifier OP1 and the ground.

The first amplifier OP1 may amplify a voltage applied to the sensing resistor $R_{SEN}$ according to a predetermined amplification degree according to the output current of the load 140 to transmit it to the current compensation unit 155.

When reviewing an operation thereof, an output current $I_{LED}$ flows to the output terminal of the load 140 as the load 140 operates. In addition, a predetermined voltage corresponding to magnitude of the output current $I_{LED}$ is applied to ends of the sensing resistor $R_{SEN}$ according to the magnitude of the output current $I_{LED}$.

In addition, the voltage applied to the ends of the sensing resistor $R_{SEN}$ is input to the non-inverting terminal (+) and the inverting terminal (-) of the first amplifier OP1. That is, the first resistor R1 and the fourth resistor R4 input a voltage $V_{RSEN-}$ applied to the negative terminal of the sensing resistor $R_{SEN}$ to the inverting terminal (-) of the first amplifier OP1. In addition, the second resistor R2 and the third resistor R3 input a voltage $V_{RSEN+}$ applied to the positive terminal of the sensing resistor $R_{SEN}$ to the non-inverting terminal (+).

Therefore, a first voltage $V_{IN-}$ corresponding to the voltage $V_{RSEN-}$ applied to the negative terminal of the sensing resistor $R_{SEN}$ is input to the inverting terminal (-) of the first amplifier OP1 according to magnitude of the first resistor R1 and the fourth resistor R4. In addition, a second voltage $V_{IN+}$ corresponding to the voltage $V_{RSEN+}$ applied to the positive terminal of the sensing resistor $R_{SEN}$ is input to the non-inverting terminal (+) of the first amplifier OP1 according to magnitude of the second resistor R2 and third resistor R3.

In addition, the first amplifier OP1 amplifies differentially and outputs the first voltage $V_{IN-}$ and the second voltage $V_{IN+}$ input via the inverting terminal (-) and the non-inverting terminal (+). That is, the first amplifier OP1 outputs an amplified voltage $V_{ISEN}$ obtained by amplifying the voltage applied to the sensing resistor $R_{SEN}$ according to a preset amplification degree.

Meanwhile, since the first amplifier OP1 operates as the differential amplifier, an ideal relationship between the first resistor R1, the second resistor R2, the third resistor R3, and the fourth resistor R4 is represented by the following equation 1.

[Equation 1]

R1/R4=R2/R3

$$\frac{R1}{R4} = \frac{R2}{R3}$$

In other words, the first amplifier OP1 operates as a differential amplifier, and accordingly, relationship between ideal resistance values is that a resistance value of the first resistor R1 is equal to that of the second resistor R2, and a resistance value of the third resistor R3 is equal to that of the fourth resistor R4.

Accordingly, the amplified voltage $V_{ISEN}$ corresponding to the output of the first amplifier OP1 is represented by the following equation 2.

[Equation 2]

$V_{ISEN}=R4/R1(V_{RSEN+} - V_{RSEN-})$

Meanwhile, the amplified voltage $V_{ISEN}$ of the first amplifier OP1 may be determined by a power voltage VDD of the reference signal output part 162 described later. At this time, the power voltage VDD is generally 3.3V. Therefore, in a situation in which an ideal normal current is output via the load 140, the amplified voltage $V_{ISEN}$ of the first amplifier OP1 is set to have a value lower than 3.3V of the power voltage VDD. This is because when the first amplifier OP1 is configured such that the amplified voltage $V_{ISEN}$ has 3.3V when the output current of the load 140 is an ideal normal current, an overcurrent state may not be accurately sensed in a state in which the overcurrent higher than the normal current flows at the load 140.

Therefore, in general, a voltage applied to the sensing resistor $R_{SEN}$ when the output current of the load 140 is an ideal normal current is about 0.3V, and accordingly, the amplified voltage $V_{ISEN}$ output via the first amplifier OP1 is 2.5V In other words, the first amplifier OP1 may amplify the voltage applied to the sensing resistor $R_{SEN}$ with an amplification degree of about 8 times to output.

Accordingly, the amplified voltage $V_{ISEN}$ of the first amplifier OP1 may be 2.5V in a state in which the ideal normal current is output via the load 140. In addition, the amplified voltage $V_{ISEN}$ of the first amplifier OP1 may be smaller than 2.5V in a state in which a low current is output via the load 140. In addition, the amplified voltage $V_{ISEN}$ of the first amplifier OP1 of the first resistor R1 may be greater than 2.5V in a state in which an overcurrent is output via the load 140.

**<Reference signal according to First embodiment>**

The reference signal output part 162 outputs a reference signal to the power voltage VDD. The reference signal output part 162 may be a pulse width modulation (PWM) signal having a predetermined duty.

The reference signal output part 162 may receive the power voltage VDD, and may generate a PWM signal having a duty corresponding to a reference signal based on the power voltage VDD to output. Here, the reference signal may be a reference voltage value corresponding to a target current that should be output from the load 140. In addition, the PWM signal is a signal of which duty is adjusted based on the power voltage VDD so as to have the reference voltage value. At this time, the power voltage VDD may be 3.3V. Therefore, the reference signal output part 162 may output a PWM signal having a peak value of 3.3V and duty adjusted so as to correspond to the reference voltage value.

The smoothing part 163 smooths the reference signal output via the reference signal output part 162, that is, the PWM signal. The smoothing part 163 includes a seventh resistor R7 and a third capacitor C3. That is, the smoothing part 163 may configure an R-C low pass filter, thereby outputting an analog signal obtained by smoothing the PWM signal.

A down resistor 164 is disposed between the smoothing part 163 and the power voltage VDD. The down resistor 164 lowers a level of the reference signal smoothed via the smoothing part 163. At this time, the level of the reference signal may be 3.3V as described above. In addition, the down resistor 164 may lower the level of the reference signal having magnitude of 3.3V to 2.5V

### <Circuit diagram of Current compensation unit>

One end of a current compensation unit 165 may be connected to the reference signal output part 162, and the other end thereof may be connected to the error amplifier 161.

In addition, the current compensation unit 165 may output a control signal for controlling the switch element Q1 based on a difference value between a reference signal supplied via the reference signal output part 162 and a signal supplied via the error amplifier 161. That is, a reference voltage $V_{IREF}$ corresponding to a reference signal output via the reference signal output part 162 and an amplified voltage $V_{ISEN}$ output via the first amplifier OP1 are input to the current compensation unit 165.

Hereinafter, a detailed circuit of the current compensation unit 165 and its operation will be described in more detail below.

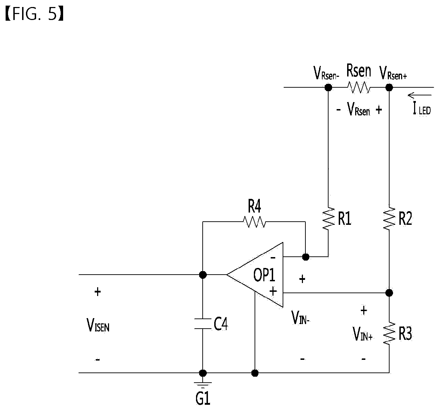

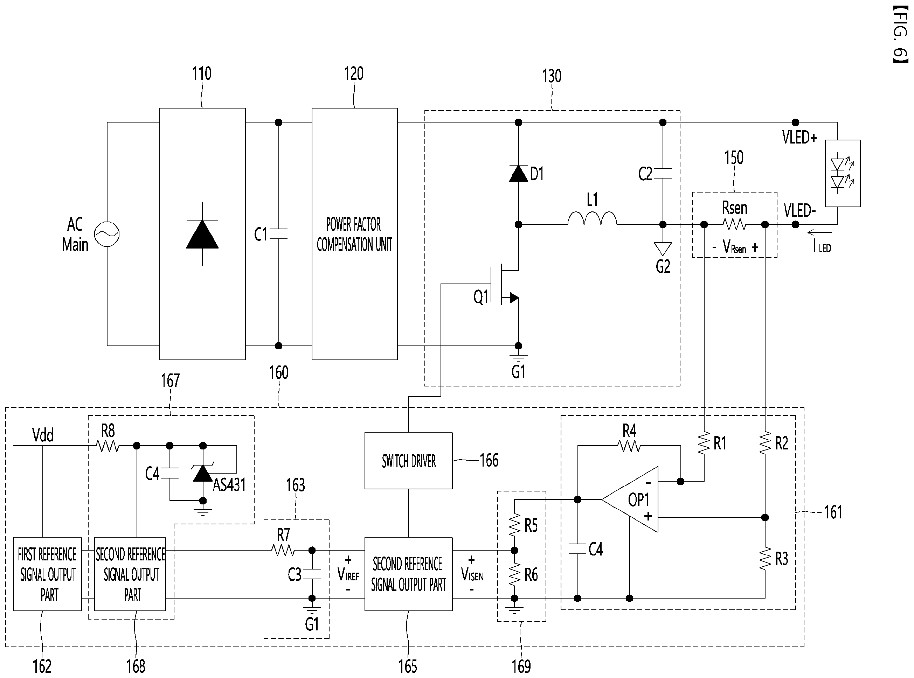

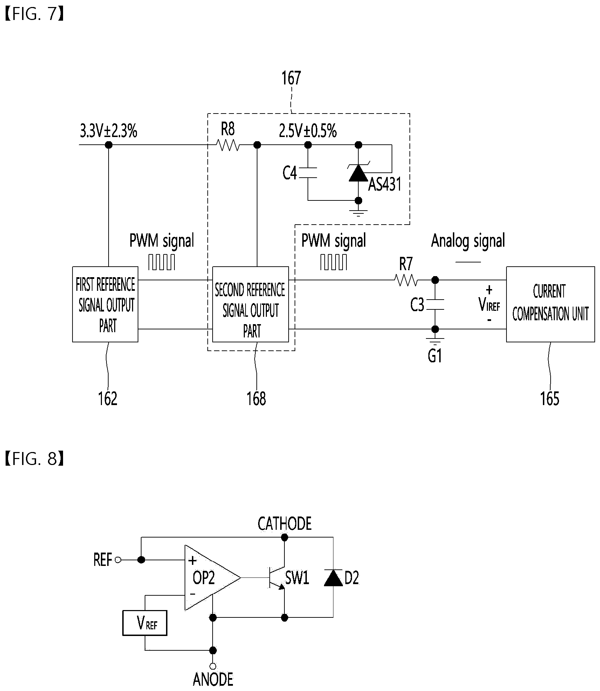

FIG. 5 is a circuit diagram of a current compensation unit according to an embodiment of the present invention, FIG. 6 is a circuit diagram of a triangular wave generator of FIG. 5, FIG. 7 is a view showing a driving waveform of a triangular wave generator according to an embodiment of the present invention, and FIG. 8 is a circuit diagram of a constant current source constituting a triangular wave generator according to an embodiment of the present invention.

Referring to FIG. 5, the current compensation unit 165 may include an amplifier OP3, a comparator OP4, and an RS latch. In addition, the current compensation unit 165 may further include a triangular wave generator 200 for generating a triangular wave. That is, the current compensation unit 165 may further include the triangular wave generator 200 in addition to the amplifier OP3, the comparator OP4, and the RS latch.

When reviewing their operation, the RS latch is set by a clock with a predetermined frequency. A pulse signal may be generated in synchronization with this set.

The amplified voltage $V_{ISEN}$ may be input to a non-inverting terminal (+) of the amplifier OP3. In addition, the reference voltage $V_{IREF}$ may be input to an inverting terminal (-) of the amplifier OP3. In addition, the amplifier OP3 may output a current control value Ic according to a difference value between the voltages input via each of the terminals.

The comparator OP4 compares a peak value of the triangular wave with the current control value Ic of the amplifier OP3. Then, when the triangular wave reaches the current control value Ic, the RS latch is reset and Q is blocked. Accordingly, a duty ratio D is determined, and this operation repeated to obtain a predetermined output voltage of a desired level.

### <Triangular wave generator according to Embodiment of the present invention>

The triangular wave generator 200 may include a constant current source 210, a triangular wave controller 220 for outputting a pulse signal, an inverter 230 for inverting and outputting the pulse signal, a fifth capacitor C5 charged by a current of the constant current source 210, and a second switch element SW2 controlled according to the pulse signal to control charging or discharging of the fifth capacitor C5.

The pulse signal may transit from a high level to a low level when a voltage of ends of the fifth capacitor C5 reaches a level of a control signal output from the amplifier OP3, and the second switch element SW2 may be turned on by the pulse signal with a low level to discharge the fifth capacitor C5.

Specifically, when reviewing an operation relationship, when a constant current $I_{capacitor}$ flows into the fifth capacitor C5 by the constant current source 410, the voltage of ends of the fifth capacitor C5 may increase with a constant slope. In detail, the relationship of $i_{capacitor}=C_1(dv_{out}/dt)$ is established according to a voltage-current relational equation of the capacitor. From this, a voltage Vout of ends of the capacitor is $1/C_1(\int i_{capacitor}dt)$. When the current $i_{capacitor}$ of the constant current source 210 is a constant value K, the voltage Vout of ends of the capacitor may be equal to Kt[V] to be a triangular wave.

The triangular wave controller 220 reads the charging voltage Vout of ends of the capacitor from the CS terminal, compares the charging voltage Vout with a level of the control signal due to the current control value Ic output from the amplifier OP3, and outputs a Ton signal with high level until the peak value of the charging voltage Vout reaches the current control value Ic. At this time, the second switch element SW2 may be maintained in an off state by the inverter 230 outputting an inverted signal of the Ton signal with high level. In addition, when the peak value of the charging voltage Vout reaches the current control value Ic, a Ton signal with low level is output, and accordingly, the inverter 230 outputs a high level, and thus the second switch element SW2 may be turned on and the fifth capacitor C5 may be discharged. In addition, the triangular wave controller 220 may read a clock signal to synchronize with a set of RS latch.

While repeating such an operation, the triangular wave generator 200 may generate triangular waves.

A duty ratio (time ratio), which is a ratio of the on time and the off time of the switch element Q1 included in the DC-DC converter 130 may be changed due to the triangular wave. When the duty ratio is changed, a level of adjustment of the level of the input power Vi of the DC-DC converter 130 may be changed.

**\<Constant current source of Triangular wave generator\>**

Referring to FIG. 8, the constant current source 210 is embodied in the triangular wave generator 200.

The constant current source 210 divides a reference voltage Vref by resistors R9 and R10 to be input to a non-inverting terminal (+) of a fifth amplifier OP5, and while the divided voltage becomes a voltage of an inverting terminal (-) of the fifth amplifier OP5, a third switch SW3 is turned on due to a potential difference between the reference voltage Vref and the divided voltage Vd at ends of the R10 resistor. In addition, as the third switch SW3 is turned on, a constant current $I_{capacitor}$ may charge the fifth capacitor C5.

When the fifth capacitor C5 is charged, Vout increases. The triangular wave controller 220 reads the increasing Vout voltage and outputs a low-level Ton signal when the Vout reaches the current control value Ic, and accordingly, the second switch SW2 turns on and the fifth capacitor C5 is discharged. While repeating this process, a triangular wave may be generated at the Vout terminal.

**\<Problems due to Power voltage VDD and Tolerance of resistor\>**

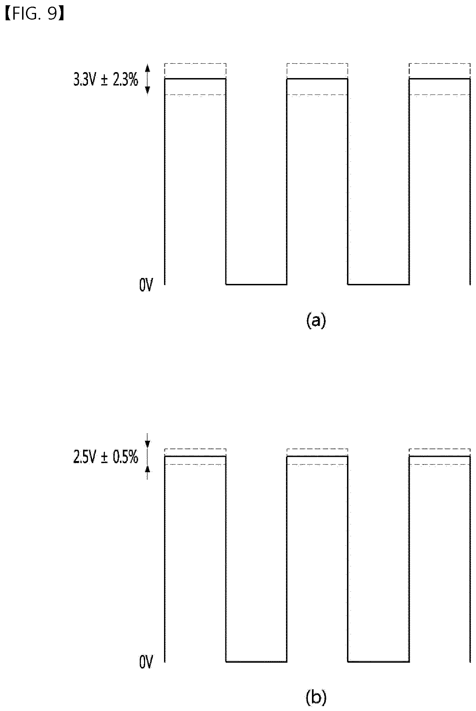

FIG. 9 is a view showing a relationship between a power voltage and a reference signal according to an embodiment of the present invention.

Meanwhile, the reference signal output part 162 has the power voltage VDD and generates the reference signal. In addition, the reference signal is determined by magnitude of the power voltage VDD. That is, the reference signal output part 162 adjusts a duty of the reference signal to make the power voltage VDD at a preset reference voltage value with a predetermined level. At this time, the reference signal output part 162 generates the reference signal by setting the magnitude of the power voltage VDD to be 3.3V.

However, the power voltage VDD has a predetermined tolerance. In other words, the same power voltage VDD of 3.3V is not always input to the reference signal output part 162, but a voltage higher than the 3.3V or a voltage lower than the 3.3V is input within the predetermined tolerance. In other words, the power voltage VDD generally has a deviation, and the deviation of the power voltage VDD is transmitted as it is to the reference signal of the reference signal output part 162. In other words, the same deviation occurs in the reference signal corresponding to the deviation of the power voltage VDD.

Therefore, when the reference signal is generated using only the power voltage VDD, there is a problem that a deviation occurs in the reference signal according to the deviation of the power voltage VDD.

In addition, as described above, the error amplifier 161 outputs an amplified voltage $V_{ISEN}$ obtained by amplifying the voltage applied to of the sensing resistor $R_{SEN}$ to a predetermined level according to the first to fourth resistors R1, R2, R3, and R4.

At this time, as shown in Equation 2 described above, in the ideal error amplifier 161, when R1=R2 and R3=R4, an amplifier output may be defined by a ratio of two resistors.

However, in general, a deviation occurs in the first to fourth resistors R1, R2, R3, and R4 constituting the error amplifier 161, and accordingly an actual amplified voltage $V_{ISEN\_REAL}$ of the first amplifier OP1 reflecting the deviation may be defined complexly as shown in Equation 3 below.

[Equation 3]

$$V_{ISEN\_REAL} = (R_3{*}(R_1{+}R_4))/(R_1{*}(R_2{+}R_3)){*}V_{RSEN+} - (R_4/R_1){*}V_{RSEN-}$$

In other words, the actual amplified voltage $V_{ISEN\_REAL}$ corresponding to the output of the first amplifier OP1 is defined by a complex equation as shown in Equation 3 by reflecting tolerances of each of the first to fourth resistors constituting the error amplifier 161.

That is, in the actual first amplifier OP1 constituting the error amplifier 161, a problem occurs that as a voltage ratio between $V_{RSEN+}$ and $V_{IN+}$ or a voltage ratio between $V_{RSEN-}$ and $V_{IN-}$ based on the first ground G1 increases, the amplified voltage $V_{ISEN}$ is affected greatly by the tolerance of each resistor.

In addition, since the output value of the first amplifier OP1 is a small value of 2.5V level, the output of the amplified voltage $V_{ISEN}$ is affected greatly by an error due to a tolerance of 1% of each resistor. That is, the maximum error rate of the actual amplified voltage $V_{ISEN}$ with respect to a target amplified voltage $V_{ISEN\_TARGET}$ according to a deviation of each resistor is as follows.

[Table 1]

| PARAMETER | CASE 1 | CASE 2 |
|---|---|---|
| $V_{REN+}$ | 20.33V | 20.33V |
| $V_{RSEN-}$ | 20V | 20V |
| $V_{ISEN\_TARGET}$ | 2.5V | 2.5V |
| RESISTOR TOLERANCE | $\pm 0.5$ % | $\pm 1$ % |
| Maximum error rate (%) of $V_{ISEN\_TARGET}$ vs. $V_{ISEN}$ | - 13.5% | - 27.2% |

As shown in Table 1, the maximum error rate of the actual amplified voltage $V_{ISEN}$ is between 13.5% and 27.2% with respect to the target amplified voltage $V_{ISEN\_TARGET}$ according to the tolerance of the resistor, which corresponds to a large numerical value when viewed based on the amplified voltage targeted actually.

Therefore, additional embodiments complementing the circuit of FIG. 3 will be proposed in the following.

**<Circuit diagram of Power supply of Second embodiment of the present invention>**

In a power supply according to a second embodiment of the present invention described below, only configurations of the reference signal output part 162 and the error amplifier 161 are different from those of FIG. 3, and the other configurations are substantially the same. Therefore, only parts to be changed will be described in detail in the following.

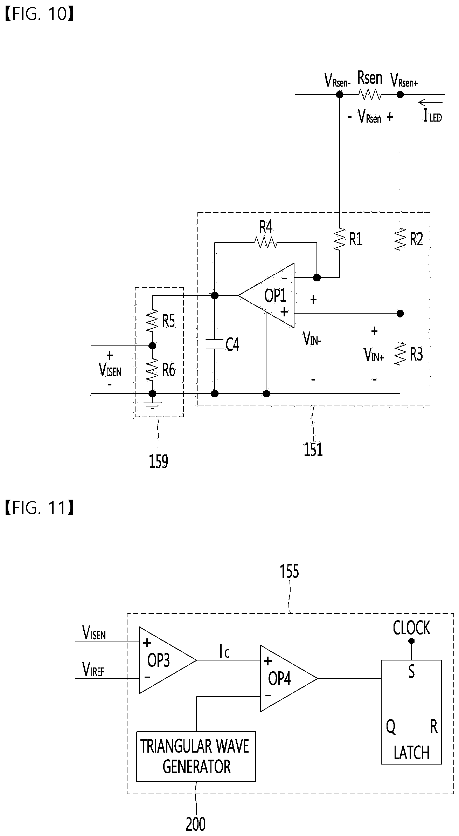

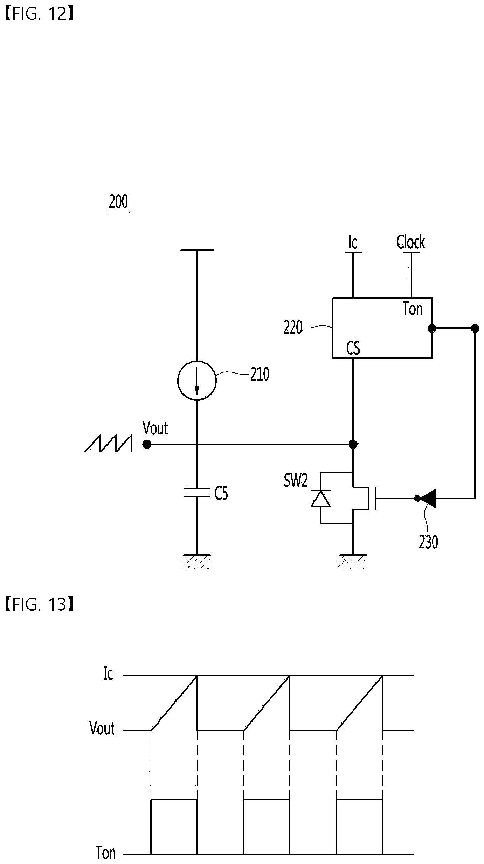

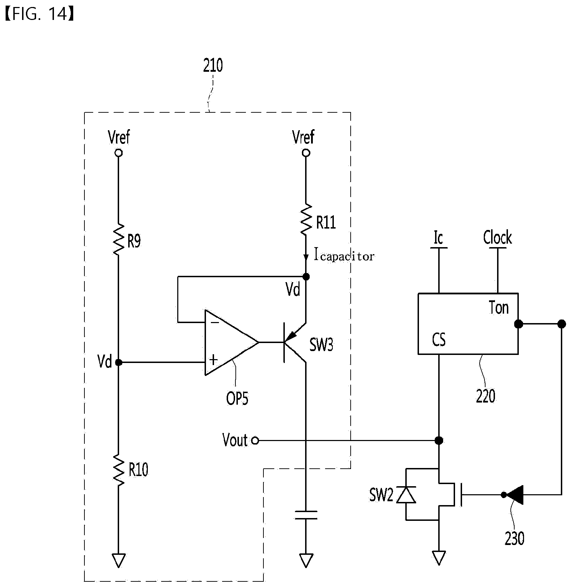

FIG. 10 is a circuit diagram of a power supply according to a second embodiment of the present invention, FIG. 11 is a detailed circuit diagram of a reference signal output part of FIG. 10, FIG. 12 is a detailed circuit diagram of a second power voltage output part of FIG. 11, FIG. 13 is a view showing waveforms of a reference signal according to the second embodiment of the present invention, and FIG. 14 is a detailed circuit diagram of an error amplifier of FIG. 10.

Referring to FIG. 10, the power supply according to the second embodiment of the present invention includes a first reference signal output part 162, a second power voltage output part 167, and a second reference signal output part 168.

The first reference signal output part 162 receives a first power voltage, and generates and outputs a first reference signal according to the first power voltage. At this time, the first reference signal is the same signal as the PWM signal output from the reference signal output part 162 in the first embodiment of the present invention.

At this time, the first reference signal output part 162 generates and outputs a first PWM signal (which is the same signal as the first reference signal) of which duty is adjusted according to a target reference voltage (a voltage corresponding to a target current of a load). At this time, a peak value of the first PWM signal is 3.3V. However, the peak value of the first PWM signal has a deviation corresponding to a deviation of the first power voltage VDD. That is, the first power voltage generally has a deviation of 2.3% of the 3.3V power, and accordingly, the 2.3% deviation of the 3.3V power is directly transmitted to the peak value of the first PWM signal output from the first reference signal output part 162.

**<Output feature of Second power voltage>**

The second power voltage output part 167 supplies a power voltage for the second reference signal output part 168 to generate the second reference signal. At this time, the second power voltage may be 2.5V At this time, the second power voltage output part 167 includes a power supply element AS431. In addition, the power supply element AS431 allows a constant power voltage of 2.5V to be supplied to the second power voltage output part 167.

To this end, the second power voltage output part 167 may include an eighth resistor R8, a fourth capacitor C4, and the power supply element AS431.

One end of the eighth resistor R8 is connected to an output terminal of the first power voltage, and the other end thereof is connected to an input terminal of the second reference signal output part 168.

One end of the fourth capacitor C4 is connected to the other end of the eighth resistor R8, and the other end thereof is connected to the ground.

The power supply element AS431 is a commonly used AS431, and a cathode terminal thereof is connected to the other end of the eighth resistor R8 and one end of the fourth capacitor C4. In addition, an anode terminal of the power supply element AS431 is connected to the ground.

Hereinafter, a detailed circuit configuration of the power supply element AS431 and its operation will be described.

The AS431 may be a regulator that guarantees thermal stability over the entire operating range. Since the AS431 features a rapid turn-on characteristic, low temperature coefficient, and low output impedance, it replaces zener diodes for applications such as switching power supplies, chargers and other adjustable regulators. A tolerance of the AS431 is around 0.5%.

The power supply element AS431 includes a second amplifier OP2, a switch element SW1, and a second diode D2.

In this case, the eighth resistor R8 downs a level of the first power voltage to generate a second power voltage, and outputs the generated second power voltage. In addition, the second power voltage downed via the eighth resistor R8 is input to a non-inverting terminal (+) of the second amplifier OP2.

In addition, a reference voltage signal $V_{REF}$ is input to an inverting terminal (-) of the second amplifier OP2. At this time, the reference voltage signal $V_{REF}$ may be 2.5V.

At this time, a deviation occurs in a voltage signal REF input to the non-inverting terminal (+) of the second amplifier OP2 via the eighth resistor R8 according to the deviation of the first power voltage. Accordingly, the second amplifier OP2 generates an output signal corresponding to a difference value between the voltage signal REF and the reference voltage signal $V_{REF}$.

In addition, the switch element SW1 is selectively turned on in accordance with the output signal of the second amplifier OP2, and outputs a constant second reference voltage to the second reference signal output part 168.

To this end, a base terminal of the switch element SW1 is connected to an output terminal of the second amplifier OP2. A collector terminal of the switch element SW1 is connected to the non-inverting terminal (+) of the second amplifier OP2. In addition, an emitter terminal of the switch element SW1 is connected to the ground.

In addition, an anode of the second diode D2 is connected to the collector terminal of the switch element SW1, and a cathode of the second diode D2 is connected to the ground together with the emitter terminal of the switch element SW1.

An operation of the power supply element AS431 configured as described above will be described below.

The cathode terminal of the power supply element AS431 is connected to the other end of the eighth resistor R8 and the non-inverting terminal (+) of the second amplifier OP2 constituting the power supply element AS431 as described above.

Accordingly, when a cathode voltage of the power supply element AS431 is lower than 2.5V corresponding to the reference voltage, the output of the second amplifier OP2 becomes 0, and accordingly, a low signal is output via the output terminal of the second amplifier OP2. At this time, when the low signal is output via the output terminal of the second amplifier OP2, the switch element SW1 connected to the second amplifier OP2 is turned off. In addition, as the switch element SW1 is turned off, the cathode voltage increases.

At this time, when the cathode voltage of the power supply element AS431 is increased to 2.5V or more, the output of the second amplifier OP2 is changed from a low signal to a high signal. At this time, as the high signal is output via the second amplifier OP2, the switch element SW1 is switched to an on-state. In addition, the switch element SW1 is switched to the on-state, and accordingly, the switch element SW1 is operated, thereby reducing the cathode voltage.

As described above, the power supply element AS431 operates the second amplifier OP2 and the switch element SW1 according to the cathode voltage, and accordingly, the second power voltage of a constant 2.5V is supplied to the second reference signal output part 168.

However, the second power voltage of 2.5V made via the power supply element AS431 also has a predetermined deviation. However, the deviation of the second power voltage of 2.5V made via the power supply element AS431 is 0.5% lower than the deviation of the first power voltage.

Meanwhile, the second reference signal output part 168 receives the second power voltage, and generates a second reference signal having the same duty as the duty of the first reference signal by using the second power voltage as a peak value.

In this case, the second reference signal has the same duty as the first reference signal, and the peak value has a value corresponding to the second power voltage output from the second power voltage output part 167. However, the peak value of the second reference signal also has a deviation corresponding to the deviation of the second power voltage. However, the deviation of the second reference voltage is 0.5% much lower than the deviation of the first reference voltage, and accordingly, the deviation of the peak value of the second reference signal is 0.5%.

Accordingly, in the present invention, a reference signal with a deviation, which is much lower than the deviation occurring as the reference signal is generated only by the first power voltage, by generating and outputting the additional second reference signal according to the second power voltage output via the separate second power voltage output part 167 as described above.

That is, as shown in FIG. 13A, since the first reference signal is generated with the first reference voltage, a deviation of about 2.3% occurs in the peak value. However, as shown in FIG. 13B, since the second reference signal is formed by the second reference voltage while having the same duty as the first reference signal, only a deviation of about 0.5% of the peak value occurs.

Therefore, the present invention provides a configuration for supplying the additional power voltage as described above so as to improve the accuracy of the reference signal supplied to the current compensation unit.

**<Circuit diagram of Error amplifier 161 of Second embodiment>**

An error amplifier 161 of the second embodiment of the present invention is the same as the error amplifier 161 of the first embodiment, and a voltage distribution resistor 169 is disposed additionally at an output terminal of a first amplifier OP1.

In addition, an output value of the first amplifier OP1 of the error amplifier 161 in the second embodiment of the present invention has a higher value than that of the first embodiment.

The error amplifier 161 may include the first amplifier OP1, first to fourth resistors R1, R2, R3, and R4, and a fourth capacitor C4. Hereinafter, a connection relationship between the first amplifier OP1 constituting the error amplifier 161 and the resistors connected thereto will be described.

The first amplifier OP1 may operate as a differential amplifier. A non-inverting terminal (+) and an inverting terminal (-) of the first amplifier OP1 may be connected to a current sensing node in which the sensing resistor $R_{SEN}$ is disposed.

The first resistor R1 may be connected between one end of the sensing resistor $R_{SEN}$ and the inverting terminal (-) of the first amplifier OP1. The second resistor R2 may be connected between the other end of the sensing resistor $R_{SEN}$ and the non-inverting terminal (+) of the first amplifier OP1. The third resistor R3 may be connected between a node corresponding to a contact point between the non-inverting terminal (+) of the first amplifier OP1 and the second resistor R2 and the ground. The fourth resistor R4 is a resistor constituting negative feedback, and may be connected between the inverting terminal (-) of the first amplifier OP1 and the output terminal of the first amplifier OP1. The fourth capacitor C4 may be connected between the output terminal of the first amplifier OP1 and the ground.

The first amplifier OP1 may amplify a voltage applied to the sensing resistor $R_{SEN}$ according to a predetermined amplification degree according to the output current of the load 140 to transmit it to the current compensation unit 165.

When reviewing an operation thereof, an output current $I_{LED}$ flows to the output terminal of the load 140 as the load 140 operates. In addition, a predetermined voltage corresponding to magnitude of the output current LED is applied to ends of the sensing resistor $R_{SEN}$ according to the magnitude of the output current $I_{LED}$.

In addition, the voltage applied to the ends of the sensing resistor $R_{SEN}$ is input to the non-inverting terminal (+) and the inverting terminal (-) of the first amplifier OP1. That is, the first resistor R1 and the fourth resistor R4 input a voltage $V_{RSEN-}$ applied to the negative terminal of the sensing resistor $R_{SEN}$ to the inverting terminal (-) of the first amplifier OP1. In addition, the second resistor R2 and the third resistor R3 input a voltage $V_{RSEN+}$ applied to the positive terminal of the sensing resistor $R_{SEN}$ to the non-inverting terminal (+).

Therefore, a first voltage $V_{IN-}$ corresponding to the voltage $V_{RSEN-}$ applied to the negative terminal of the sensing resistor $R_{SEN}$ is input to the inverting terminal (-) of the first amplifier OP1 according to magnitude of the first resistor R1 and the fourth resistor R4. In addition, a second voltage $V_{IN+}$ corresponding to the voltage $V_{RSEN+}$ applied to the positive terminal of the sensing resistor $R_{SEN}$ is input to the non-inverting terminal (+) of the first amplifier OP1 according to magnitude of the second resistor R2 and third resistor R3.

In addition, the first amplifier OP1 amplifies differentially and outputs the first voltage $V_{IN-}$ and the second voltage $V_{IN+}$ input via the inverting terminal (-) and the non-inverting terminal (+). That is, the first amplifier OP1 outputs an amplified voltage $V_{ISEN}$ obtained by amplifying the voltage applied to the sensing resistor $R_{SEN}$ according to a preset amplification degree.

In this case, the amplified voltage $V_{ISEN}$ output via the output terminal of the first amplifier OP1 may have magnitude greater than nine times the original voltage. Preferably, the amplified voltage $V_{ISEN}$ of the first amplifier OP1 may have a value of 3V or more.

That is, the amplification degree of the first amplifier OP1 in the second embodiment of the present invention is higher than that of the first amplifier OP1 in the first embodiment. The amplified voltage $V_{ISEN}$ of the first embodiment is lower than 2.5V. However, the amplified voltage $V_{ISEN}$ of the second embodiment has a minimum of 3.0V or more, which is higher than 2.5V

In this case, the amplified voltage $V_{ISEN}$ corresponding to the output value of the first amplifier OP1 is affected by a power voltage of the first amplifier OP1. In general, the power voltage of the first amplifier OP1 is a VCC voltage, which is 24V. In addition, some products use 30V as the power voltage of the first amplifier OP1. Therefore, the amplified voltage $V_{ISEN}$ of the first amplifier OP1 in the second embodiment of the present invention is set to have a level of 70% to 80% of the power voltage.

Preferably, the amplification degree of the first amplifier OP1 is set to be 9 times or more and less than 70 times. For example, when the power voltage is 24V, and a voltage applied to the sensing resistor when normal current flows is 0.3V, the amplified voltage $V_{ISEN}$ has a value between 2.7V and 21V. Preferably, the amplification degree of the first amplifier OP1 is set to have 15 times or more and less than 65 times. For example, when the power voltage is 24V, and the voltage applied to the sensing resistor when the normal current flows is 0.3V, the amplified voltage $V_{ISEN}$

has a value between 4.5V and 19.5V. Preferably, the amplification degree of the first amplifier OP1 is set to have 40 times or more and less than 60 times. For example, when the power voltage is 24V, and the voltage applied to the sensing resistor when the normal current flows is 0.3V, the amplified voltage $V_{ISEN}$ has a value between 12V and 18V.

Meanwhile, the voltage distribution resistors R5 and R6 are disposed at the output terminal of the first amplifier OP1. The voltage distribution resistors R5 and R6 down the amplified voltage $V_{ISEN}$ of the first amplifier OP1 to a desired value.

That is, the following conditions need be satisfied so that the amplified voltage $V_{ISEN}$ corresponding to the output of the first amplifier OP1 is not affected by the tolerance of the first to fourth resistors.

$$V_{SEN+} = V_{IN+}$$

$$V_{SEN-} = V_{IN-}$$

That is, when the first resistor R1 and the second resistor R2 have a value close to 0 ohms, the output deviation of the first amplifier OP1 due to the first to fourth resistors is almost eliminated. However, in actual circuit design, the output of the first amplifier OP1 is limited by the power voltage VCC, and magnitude of the output voltage corresponding to the amplified voltage $V_{ISEN}$ is also limited.

Accordingly, in the present invention, the voltage distribution resistors R5 and R6 are additionally installed at the output terminal of the first amplifier OP1 while increasing the amplification degree of the first amplifier OP1 than before, and accordingly, it may be designed such that a value of final voltage output via the voltage distribution resistors R5 and R6 becomes a desired output voltage $V_{SEN}$.

As described above, in the present invention, as the voltage distribution resistors R5 and R6 are additionally installed while increasing the amplification degree of the first amplifier OP1, the amplified voltage $V_{ISEN\_REAL}$ which is finally input to the current compensation unit is represented by the following equation 4.

[Equation 4]

$$V_{ISEN\_REAL} = ((R_3*(R_1+R_4))/(R_1*(R_2+R_3))*V_{RSEN+})*(R_6/(R_5+R_6))$$

In other words, the actual amplified voltage $V_{ISEN\_REAL}$ finally supplied to the current compensation unit by reflecting tolerances of each of the first to fourth resistors constituting the error amplifier 161 and the voltage distribution resistors R5 and R6, is represented by Equation 4.

In addition, the maximum error rate of the actual amplified voltage $V_{ISEN}$ with respect to a target amplified voltage $V_{ISEN\_TARGET}$ according to a deviation of the first to sixth resistors is as follows.

[Table 2]

| PARAMETER | CASE 1 | CASE 2 |
|---|---|---|
| $V_{REN+}$ | 20.33V | 20.33V |
| $V_{RSEN-}$ | 20V | 20V |
| $V_{ISEN\_TARGET}$ | 2.5V | 2.5V |
| RESISTOR TOLERANCE | ±0.5 % | ±1 % |
| Maximum error rate (%) of $V_{ISEN\_TARGET}$ vs. $V_{ISEN}$ | - 2.0% | -4.0% |

As shown in Table 1, the maximum error rate of the actual amplified voltage $V_{ISEN}$ with respect to the target amplified voltage $V_{ISEN\_TARGET}$ according to the tolerance of the resistor was found to be in a level of 2.0% to 4.0% significantly lower than 13.5% to 27.2% of the first embodiment.

In the present invention, an error amplifier is disposed at an output terminal of a sensing resistor, and a detection signal is transmitted via the error amplifier. Therefore, in the present invention, while separating a ground of a DC-DC converter and a ground of a light-emitting diode, a ground of a constant current controller is used as the same ground as the DC-DC converter. Accordingly, according to an embodiment of the present invention, the accuracy of the sensed current may be increased by solving occurrence of a current deviation caused by the ground separation, and a disposition space of a printed circuit board may be reduced by circuit minimization according to eliminating an insulating component that needs to be additionally disposed. In addition, according to the present invention, the degree of freedom in circuit design may be increased when sensing current in a state in which a ground potential difference exists.

In addition, in the present invention, a power supply circuit having a low tolerance is added to a reference signal output circuit. Accordingly, in the present invention, the final reference signal supplied to a current compensation unit is generated by a power having a tolerance lower than that of a VDD power. Therefore, according to the present invention, the tolerance of the VDD power supplied to a micro control unit may be ignored, and an error of the reference signal generated by a power tolerance of the VDD power may be minimized.

In addition, in the present invention, a current applied to the sensing resistor of an output terminal of a light-emitting diode is sensed by using an error amplifier. In this case, the present invention allows the error amplifier to have an amplification degree of at least 9 times or more. In other words, the present invention allows an output voltage of the error amplifier to have a level of 70% to 80% of a power voltage of the error amplifier in a state in which normal current flows to the light-emitting diode. In the present invention, while increasing an output voltage value of the error amplifier as compared with the conventional one, a voltage distribution part is additionally disposed between the error amplifier and the current compensation unit. Accordingly, in the present invention, it is possible to minimize an error of a sensing voltage value with respect to an output current of the light-emitting diode according to a tolerance of a plurality of resistors constituting the error amplifier. Therefore, according to the embodiment of the present invention, it is possible to increase the accuracy of a current sensing value by applying to current sensing of a device requiring precision control.

The characteristics, structures and effects described in the embodiments above are included in at least one embodiment but are not limited to one embodiment. Furthermore, the characteristics, structures, effects, and the like illustrated in each of the embodiments may be combined or modified even with respect to other embodiments by those of ordinary skill in the art to which the embodiments pertain. Thus, it would be construed that contents related to such a combination and such a modification are included in the scope of the embodiments.

The above description has been focused on the embodiment, but it is merely illustrative and does not limit the embodiment. A person skilled in the art to which the embodiment pertains may appreciate that various modifications and applications not illustrated above are possible without departing from the essential features of the embodiment. For example, each component particularly represented in the embodiment may be modified and implemented. In addition, it should be construed that differences related to such changes and applications are included in the scope of the present invention defined in the appended claims.

**Claims**

1.   A power supply comprising:

a conversion unit that adjusts a level of an input voltage according to a pulse control signal applied to a first switch element to output an output voltage to a load;
a detection unit for detecting an output current of the load; and
a control unit for generating the pulse control signal according to the output current of the load, and for driving the first switch element according to the generated pulse control signal,
wherein the control unit includes
a first reference signal output part that receives a first power voltage, and outputs a first reference signal corresponding to the reference voltage using the first power voltage,
a second reference signal output part that receives a second power voltage and the first reference signal, and outputs a second reference signal corresponding to the first reference signal using the second power voltage,
a detection signal output part that outputs a detection signal corresponding to the output current detected by the detection unit, and
a current compensation unit that compares the second reference signal and the detection signal, and generates a pulse control signal for compensating the output current of the load based on the comparison result.

2.   The power supply of claim 1, wherein the second reference signal output part has a peak value corresponding to magnitude of the second power voltage, and outputs a pulse width modulation signal having the same duty as the first reference signal.

3.   The power supply of claim 2, wherein the second power voltage is smaller than the first power voltage.

4.   The power supply of claim 1, wherein the control unit further includes a second power voltage output part that receives the first power voltage, and downs the first power voltage to output the second power voltage to the second reference signal output part.

5. The power supply of claim 4, wherein the second power voltage output part includes a resistor disposed at an output terminal of the first power voltage, and
a power supply element that compares an output value of the resistor and a reference value, and outputs the second power voltage to the second reference signal output part according to the comparison result.

6. The power supply of claim 5, wherein power supply element includes
a first amplifier that includes a non-inverting terminal to which the output value of the resistor is input and an inverting terminal to which the reference value is input, and outputs a logic signal corresponding to a value of a difference between the output value of the resistor and the reference value, and
a second switch element that is selectively switched according to the logic signal output via the first amplifier.

7. The power supply of claim 6, wherein a collector terminal of the second switch element, which constitutes a cathode terminal of the power supply element, and an output terminal of the resistor are connected to the non-inverting terminal of the first amplifier.

8. The power supply of claim 1, wherein the detection signal output part includes an error amplifier connected to the detection unit and outputting an amplified voltage obtained by amplifying a voltage corresponding to the output current of the load.

9. The power supply of claim 8, wherein the error amplifier includes
a plurality of first resistors connected to one end of the detection unit,
a plurality of second resistors connected to the other end of the detection unit,
a second amplifier including an inverting terminal connected to the plurality of first resistors and a non-inverting terminal connected to the plurality of second resistors, and outputting the amplified voltage, and
a voltage distribution part that receives the amplified voltage, and downs the received amplified voltage to output the detection signal to the current compensation unit.

10. The power supply of claim 9, wherein the second amplifier outputs the amplified voltage obtained by amplifying a voltage detected by the detection unit at least nine times or more.

【FIG. 1】

100

110          120          130          140

| RECTIFIER | POWER FACTOR COMPENSATION UNIT | DC-DC CONVERTER | LOAD |

| CONTROL UNIT | DETECTION UNIT |

160          150

【FIG. 2】

【FIG. 3】

VLED+　VLED-　$I_{LED}$

150　Rsen　$-V_{Rsen}+$

161

R2　R3　R1

OP1　R4　C4

130　C2　G2　L1　D1　Q1　G1

120　POWER FACTOR COMPENSATION UNIT

160

166　SWITCH DRIVER

165　CURRENT COMPENSATION UNIT　$+V_{ISEN}-$　G1

164　$+V_{IREF}-$

163　R7　C3　G1

162　REFERENCE SIGNAL OUTPUT PART　Vdd

【FIG. 4】

3.3V ± TOLERANCE

0V

(a)

3.3V ± TOLERANCE

0V

(b)

【FIG. 5】

【FIG. 6】

【FIG. 7】

【FIG. 8】

【FIG. 9】

3.3V ± 2.3%

0V

(a)

2.5V ± 0.5%

0V

(b)

【FIG. 10】

【FIG. 11】

【FIG. 12】

【FIG. 13】

【FIG. 14】

## INTERNATIONAL SEARCH REPORT

| International application No. |
| --- |
| **PCT/KR2019/002590** |

| A. CLASSIFICATION OF SUBJECT MATTER |
| --- |
| *H02M 3/156(2006.01)i, H02M 1/08(2006.01)i, H05B 33/08(2006.01)i* |
| According to International Patent Classification (IPC) or to both national classification and IPC |

| B. FIELDS SEARCHED |
| --- |
| Minimum documentation searched (classification system followed by classification symbols)<br>H02M 3/156; G05F 1/10; G05F 1/565; H02M 1/32; H02M 3/10; H02M 3/155; H02M 3/335; H05B 37/02; H02M 1/08; H05B 33/08 |
| Documentation searched other than minimum documentation to the extent that such documents are included in the fields searched<br>Korean utility models and applications for utility models: IPC as above<br>Japanese utility models and applications for utility models: IPC as above |
| Electronic data base consulted during the international search (name of data base and, where practicable, search terms used)<br>eKOMPASS (KIPO internal) & Keywords: DC/DC converter, reference voltage, pulse width modulation(PWM), flyback, negative feedback, error amplifier, allowable error |

| C. DOCUMENTS CONSIDERED TO BE RELEVANT | | |
| --- | --- | --- |
| Category* | Citation of document, with indication, where appropriate, of the relevant passages | Relevant to claim No. |
| A | KR 10-2015-0133607 A (LG INNOTEK CO., LTD.) 30 November 2015<br>See paragraphs [52], [63], [161]; claims 2, 6, 20; and figures 8, 21. | 1-10 |
| A | KR 10-2014-0145814 A (SK HYNIX INC.) 24 December 2014<br>See paragraph [19]; and figure 2. | 1-10 |
| A | KR 10-1167807 B1 (SAMSUNG ELECTRO-MECHANICS CO., LTD.) 25 July 2012<br>See the entire document. | 1-10 |
| A | KR 10-0941509 B1 (SILICON MITUS, INC.) 10 February 2010<br>See the entire document. | 1-10 |
| A | US 2013-0229832 A1 (PATEL, Bharatkumar K. et al.) 05 September 2013<br>See the entire document. | 1-10 |

| ☐ Further documents are listed in the continuation of Box C. | ☒ See patent family annex. |
| --- | --- |

| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |
| Date of the actual completion of the international search<br><br>12 JUNE 2019 (12.06.2019) | Date of mailing of the international search report<br><br>**12 JUNE 2019 (12.06.2019)** |
| Name and mailing address of the ISA/KR<br>Korean Intellectual Property Office<br>Government Complex Daejeon Building 4, 189, Cheongsa-ro, Seo-gu, Daejeon, 35208, Republic of Korea<br>Facsimile No. +82-42-481-8578 | Authorized officer<br><br><br>Telephone No. |

Form PCT/ISA/210 (second sheet) (January 2015)

INTERNATIONAL SEARCH REPORT
Information on patent family members

International application No.

**PCT/KR2019/002590**

| Patent document cited in search report | Publication date | Patent family member | Publication date |
|---|---|---|---|
| KR 10-2015-0133607 A | 30/11/2015 | CN 105099188 A | 25/11/2015 |
| | | CN 105099188 B | 19/06/2018 |
| | | EP 2953249 A2 | 09/12/2015 |
| | | EP 2953249 A3 | 25/05/2016 |
| | | EP 2953249 B1 | 22/08/2018 |
| | | KR 10-1637650 B1 | 20/07/2016 |
| | | US 2015-0338862 A1 | 26/11/2015 |
| | | US 9684320 B2 | 20/06/2017 |
| KR 10-2014-0145814 A | 24/12/2014 | US 2014-0368180 A1 | 18/12/2014 |
| | | US 2017-0269626 A1 | 21/09/2017 |
| KR 10-1167807 B1 | 25/07/2012 | CN 102570819 A | 11/07/2012 |
| | | US 2012-0163037 A1 | 28/06/2012 |
| KR 10-0941509 B1 | 10/02/2010 | US 2010-0327772 A1 | 30/12/2010 |
| | | US 8648545 B2 | 11/02/2014 |
| US 2013-0229832 A1 | 05/09/2013 | CN 104160604 A | 19/11/2014 |
| | | CN 104160604 B | 10/11/2017 |
| | | WO 2013-130836 A2 | 06/09/2013 |
| | | WO 2013-130836 A3 | 31/10/2013 |

Form PCT/ISA/210 (patent family annex) (January 2015)